# EUROPÄISCHE PATENTSCHRIFT

(11) **EP 1 139 758 B1**
(45) Veröffentlichungstag und Bekanntmachung des Hinweises auf die Patenterteilung: **02.05.2003**
(21) Anmeldenummer: 99963499.1
(22) Anmeldetag: 11.12.1999
(51) Int. Cl.: A01N 47/24

(54) **FUNGIZIDE MISCHUNG**
FUNGICIDE MIXTURE
MELANGE FONGICIDE

(30) Priorität: 22.12.1998 DE 19859250
(43) Veröffentlichungstag der Anmeldung: 10.10.2001
(73) Patentinhaber: BASF AKTIENGESELLSCHAFT, 67056 Ludwigshafen (DE)
(72) Erfinder: SCHELBERGER, Klaus, D-67161 Gönnheim (DE); SCHERER, Maria, D-76829 Landau (DE); SAUR, Reinhold, D-67459 Böhl-Iggelheim (DE); APPEL, Josef, D-67112 Mutterstadt (DE); LEYENDECKER, Joachim, D-68326 Ladenburg (DE); AMMERMANN, Eberhard, D-64646 Heppenheim (DE); GROTE, Thomas, D-67105 Schifferstadt (DE); LORENZ, Gisela, D-67434 Neustadt (DE); STRATHMANN, Siegfried, D-67117 Limburgerhof (DE)
(86) Internationale Anmeldenummer: EP9909812
(87) Internationale Veröffentlichungsnummer: WO00036921

(56) Entgegenhaltungen:
- WO-A-96/03047
- WO-A-96/18299
- WO-A-97/40673
- WO-A-97/40688
- WO-A-98/41094
- WO-A-98/54969

## Beschreibung

Die vorliegende Erfindung betrifft eine fungizide Mischung, welche
a) eine Verbindung der Formel I 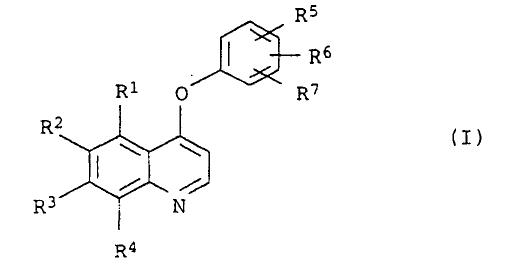 ihr N-Oxid oder eines ihrer Salze, in der die Reste die folgende Bedeutung haben:
   - R¹, R², R³, R⁴: unabhängig voneinander: Wasserstoff, Hydroxy, Nitro, Halogen, C₁-C₄-Alkyl, C₁-C₄-Halogenalkyl, C₁-C₄-Alkoxy, C₁-C₄-Halogenalkoxy, C₁-C₄-Alkylthio, C₁-C₄-Halogenalkylthio;
   - R⁵,R⁶,R⁷: unabhängig voneinander: Wasserstoff, Hydroxy, Cyano, Nitro, Halogen, C₁-C₇-Alkyl, C₁-C₇-Halogenalkyl, C₁-C₇-Alkoxy, C₁-C₇-Halogenalkoxy, C₁-C₇-Alkylthio, C₁-C₇-Halogenalkylthio, C₁-C₇-Hydroxyalkyl, C₂-C₄-Acyl, Aryl, Aryloxy,
   wobei die Reste mit Aryl ihrerseits eine bis drei der folgenden Gruppen tragen können: Cyano, Nitro, Halogen, C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio, und
b) eine Verbindung der Formel II, 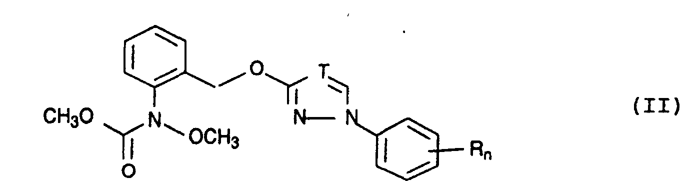 in der T CH oder N bedeutet, n für 0, 1 oder 2 steht und R Halogen, C₁-C₄-Alkyl oder C₁-C₄-Halogenalkyl bedeutet, wobei die Reste R verschieden sein können, wenn n für 2 steht,
in einer synergistisch wirksamen Menge enthält.

Außerdem betrifft die Erfindung Verfahren zur Bekämpfung von Schadpilzen mit den Verbindungen I und den Verbindungen II oder sie enthaltenden synergistischen Mischungen und die Verwendung der Verbindungen I bzw. der Verbindungen II zur Herstellung derartiger Mischungen.

Verbindungen der Formel I, deren fungizide Wirkung sowie deren Herstellung, sind bekannt aus US-A 5 240 940 sowie aus ACS Sympos. Ser. 443, Seite 538 bis Seite 552 (1991). Daneben sind fungizide Mischungen der Verbindungen I mit fungiziden Wirkstoffen aus der Klasse der Strobilurine, wie Kresoxim-Methyl bekannt (WO-A 96/18299).

Die Verbindungen der Formel II, ihre Herstellung und ihre Wirkung gegen Schadpilze sind ebenfalls aus der Literatur bekannt (WO-A 96/01,256 und 96/01,258). Weiterhin sind fungizide Mischungen der Verbindungen II mit anderen fungiziden Wirkstoffen in WO-A 97/40688, WO-A 97/40673 und WO-A 98/54969 beschrieben.

Schließlich ist aus WO-A 98/41094 und WO-A 96/03047 allgemein zu entnehmen, dass Strobilurine in Mischungen mit diversen Herbiziden oder Fungiziden aus der Klasse der Anilide und Hydroxamsäurederivate interessante Eigenschaften aufweisen.

Im Hinblick auf eine Senkung der Aufwandmengen und eine Verbesserung des Wirkungsspektrums der bekannten Verbindungen lagen der vorliegenden Erfindungen Mischungen zugrunde, die bei verringerter Gesamtmenge an ausgebrachten Wirkstoffen eine verbesserte Wirkung gegen Schadpilzen aufweisen (synergistische Mischungen).

Demgemäß wurden die eingangs definierten Mischungen gefunden.
Es wurde außerdem gefunden, daß sich bei gleichzeitiger, und zwar gemeinsamer oder getrennter Anwendung der Verbindungen I und der Verbindungen II oder bei Anwendung der Verbindungen I und der Verbindungen II nacheinander Schadpilze besser bekämpfen lassen, als mit den Verbindungen I oder II allein.

Die Verbindungen I bzw. II sind wegen des basischen Charakters des Ring-Stickstoffatoms bzw. der NH-Gruppierung in der Lage, mit anorganischen oder organischen Säuren oder mit Metallionen Salze zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure oder Kohlensäure.

Als organische Säuren kommen beispielsweise in Betracht: Ameisensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl, welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl, welche eine oder zwei Phosphonsäurereste tragen), wobei die Alkyl- bzw. Arylreste weitere Substituenten tragen können, z.B. p-Toluolsulfonsäure, Salicylsäure, p-Aminosalicylsäure, 2-Phenoxybenzoesäure, 2-Acetoxybenzoesäure etc.

Als Metallionen kommen insbesondere die Ionen der Elemente der zweiten Hauptgruppe, insbesondere Calcium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink in Betracht. Besonders bevorzugt sind die Metallionen der Elemente der Nebengruppen der vierten Periode. Die Metalle können dabei in den verschiedenen ihnen zukommenden Wertigkeiten vorliegen.

Ferner lassen sich die Verbindungen I in an sich bekannter Weise in die N-Oxide überführen (vgl. US-A 5 240 940).

Bevorzugt werden für die Bereitstellung der erfindungsgemäßen fungiziden Mischungen Verbindungen I, ihre Salze oder N-Oxide verwendet, in denen die Reste die folgende Bedeutung haben:
- R¹,R²,R³,R⁴: unabhängig voneinander Wasserstoff, Halogen, C₁-C₂-Alkyl, C₁-C₂-Halogenalkyl, C₁-C₂-Alkoxy, C₁-C₂-Halogenalkoxy oder C₁-C₂-Alkylthio;
- R⁵,R⁶,R⁷: unabhängig voneinander Wasserstoff, Nitro, Cyano, Halogen, C₁-C₄-Alkyl, C₁-C₄-Halogenalkyl, C₁-C₄-Alkoxy oder Phenyl.

Im Hinblick auf die Anwendbarkeit als Mischungspartner sind insbesondere die Verbindungen Ia gemäß der folgenden Tabelle 1 bevorzugt.

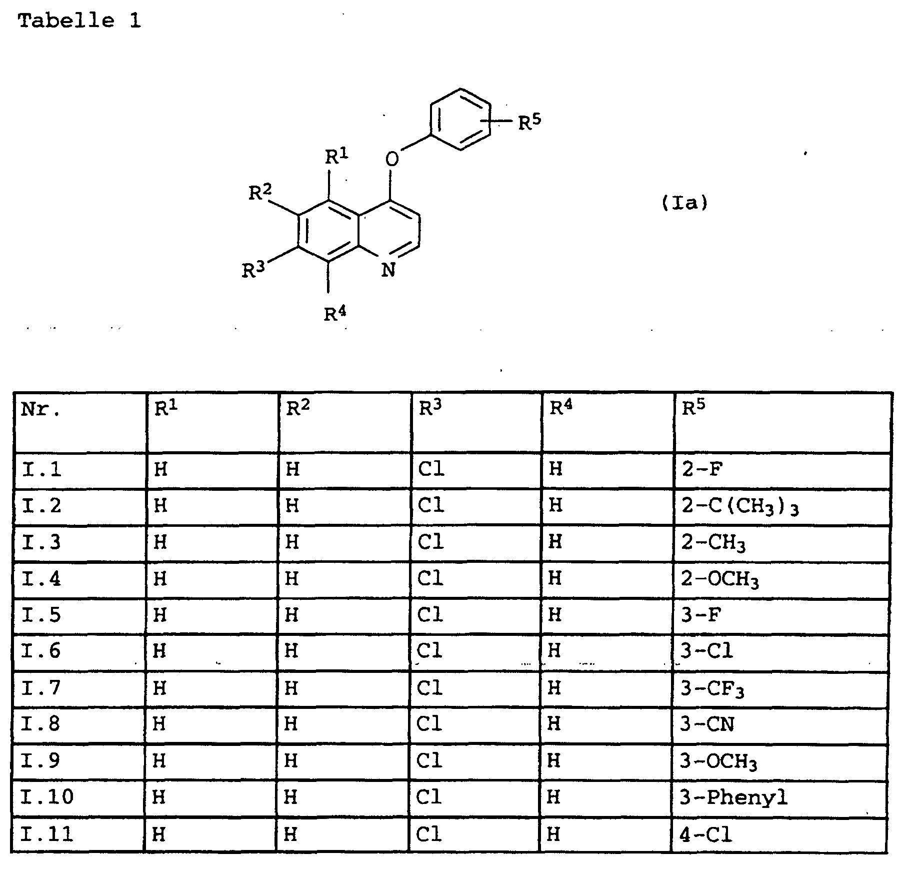

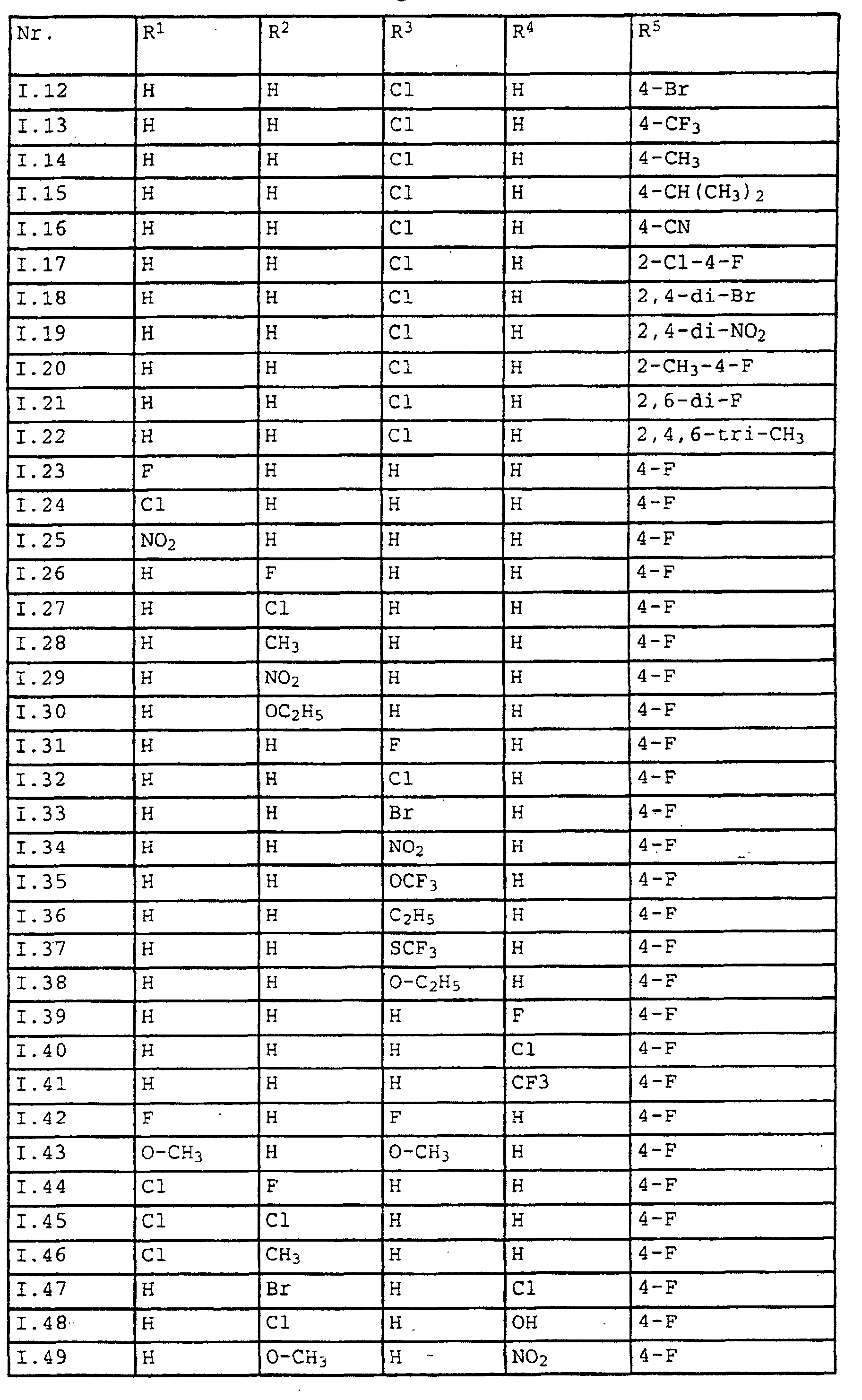

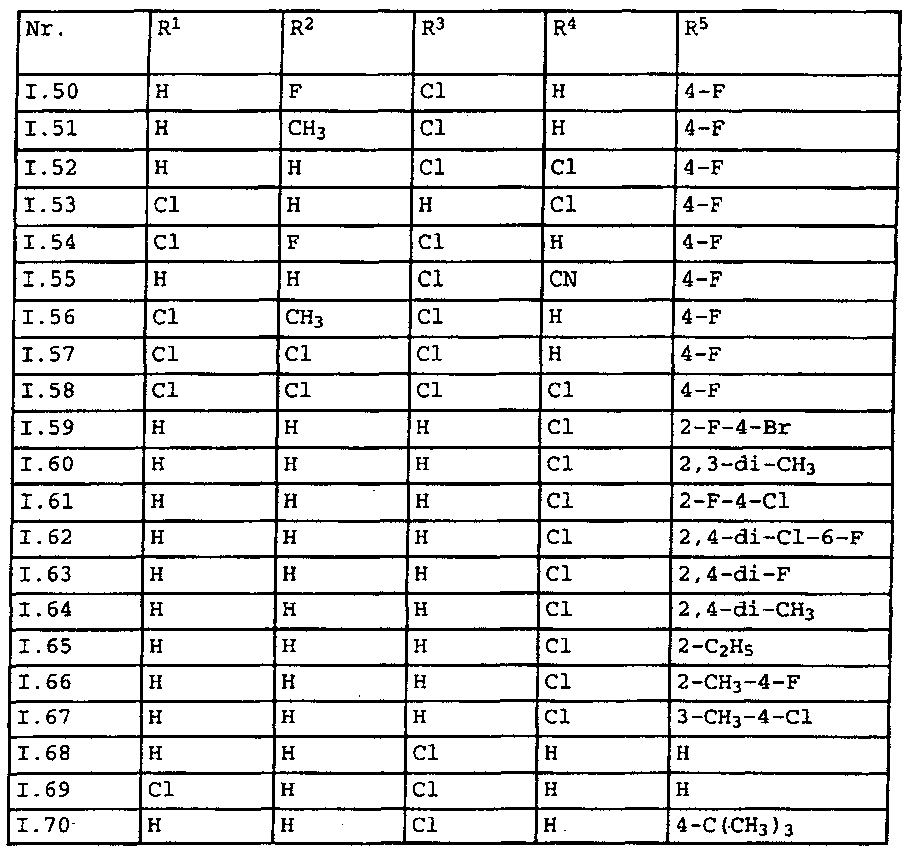

Ganz besonders bevorzugt sind die Verbindungen Ia gemäß Tabelle 2 sowie das Hydrochlorid und das N-Oxid der darin genannten Verbindung I.78.

**Tabelle 2**

| Nr. | R¹ | R² | R³ | R⁴ | R⁵ |
|---|---|---|---|---|---|
| I.71 | H | H | Cl | H | 2-Cl |
| I.72 | H | H | Cl | H | 2-Br |
| I.73 | H | H | Cl | H | 2-CN |
| I.74 | H | H | Cl | H | 2-CF₃ |
| I.75 | H | H | Cl | H | 2-NO₂ |
| I.76 | H | H | Cl | H | 4-F |
| I.77 | H | H | Cl | H | 2,4-di-F |
| I.78 | Cl | H | Cl | H | 4-F |
| I.79 | H | H | H | Cl | 2-Cl-4-F |
| I.80 | CH₃ | H | CH₃ | H | 4-F |

Die in oder bei den Tabellen 1 und 2 genannten Verbindungen der Formel Ia sind bekannt aus US-A 5 240 940 und/oder ACS Sympos. Ser. 443, Seite 538 bis Seite 552 (1991). Verbindung I.78 aus Tabelle 2 ist unter dem Common name Quinoxyfen bekannt.

Bevorzugt werden für die Bereitstellung der erfindungsgemäßen fungiziden Mischungen Verbindungen II, in denen T und R die in Tabelle 3 angegebene Bedeutung haben.

**Tabelle 3:**

| **Nr**. | **T** | **R**_{**n**} |
|---|---|---|
| II.1 | N | 2-F |
| II.2 | N | 3-F |
| II.3 | N | 4-F |
| II.4 | N | 2-Cl |
| II.5 | N | 3-Cl |
| II.6 | N | 4-Cl |
| II.7 | N | 2-Br |
| II.8 | N | 3-Br |
| II.9 | N | 4-Br |
| II.10 | N | 2-CH₃ |
| II.11 | N | 3-CH₃ |
| II.12 | N | 4-CH₃ |
| II.13 | N | 2-CH₂CH₃ |
| II.14 | N | 3-CH₂CH₃ |
| II.15 | N | 4-CH₂CH₃ |
| II.16 | N | 2-CH(CH₃)₂ |
| II.17 | N | 3-CH(CH₃)₂ |
| II.18 | N | 4-CH(CH₃)₂ |
| II.19 | N | 2-CF₃ |
| II.20 | N | 3-CF₃ |
| II.21 | N | 4-CF₃ |
| II.22 | N | 2,4-F₂ |
| II.23 | N | 2,4-Cl₂ |
| II.24 | N | 3,4-Cl₂ |
| II.25 | N | 2-Cl, 4-CH₃ |
| II.26 | N | 3-Cl, 4-CH₃ |
| II.27 | CH | 2-F |
| II.28 | CH | 3-F |
| II.29 | CH | 4-F |
| II.30 | CH | 2-Cl |
| II.31 | CH | 3-Cl |
| II.32 | CH | 4-Cl |
| II.33 | CH | 2-Br |
| II.34 | CH | 3-Br |
| II.35 | CH | 4-Br |
| II.36 | CH | 2-CH₃ |
| II.37 | CH | 3-CH₃ |
| II.38 | CH | 4-CH₃ |
| II.39 | CH | 2-CH₂CH₃ |
| II.40 | CH | 3-CH₂CH₃ |
| II.41 | CH | 4-CH₂CH₃ |
| II.42 | CH | 2-CH(CH₃)₂ |
| II.43 | CH | 3-CH(CH₃)₂ |
| II.44 | CH | 4-CH(CH₃)₂ |
| II.45 | CH | 2-CF₃ |
| II.46 | CH | 3-CF₃ |
| II.47 | CH | 4-CF₃ |
| II.48 | CH | 2,4-F₂ |
| II.49 | CH | 2,4-Cl₂ |
| II.50 | CH | 3,4-Cl₂ |
| II.51 | CH | 2-Cl, 4-CH₃ |
| II.52 | CH | 3-Cl, 4-CH₃ |

Besonders bevorzugt werden die Verbindungen II.12, II.23, II.32 und II.38.

In einigen Fällen hat es sich als vorteilhaft herausgestellt, weitere fungizide Wirkstoffe neben den fungiziden Wirkstoffen I und II in den erfindungsgemäßen Mischungen einzusetzen. Besonders zu erwähnen sind hier Wirkstoffe aus der Gruppe der Azole oder der Morpholin- und Piperidinderivate.

Als Azole sind dabei insbesondere die nachstehend genannten Verbindungen bevorzugt:
Bromuconazol, Proc. Br. Crop Prot. Conf.-Pests Dis., 5-6, 439 (1990) ;
Cyproconazol, US-A 4,664,696;
Difenoconazol, GB-A 2,098,607;
Diniconazol, CAS RN [83657-24-3];
Epoxiconazol, EP-A 196 038;
Fenbuconazol (vorgeschlagen), EP-A 251 775;
Fluquinconazol. Proc. Br. Crop Prot. Conf.-Pests Dis., 5-3, 411 (1992);
Flusilazol, Proc. Br. Crop Prot. Conf.-Pests Dis., 1, 413 (1984);
Hexaconazol, CAS RN [79983-71-4];
Metconazol, Proc. Br. Crop Prot. Conf.-Pests Dis., 5-4, 419 (1992);
Prochloraz, US-A 3,991,071;
Propiconazol, GB-A 1,522,657;
Tebuconazol, US-A 4,723,984;
Tetraconazol, Proc. Br. Crop Prot. Conf.-Pests Dis., 1, 49 (1988);
Triflumizol, JP-A 79/119,462
Flutriafol, CAS RN [76674-21-0]
Myclobutanil, CAS RN [88671-89-0].

Als besonders bevorzugter Mischungspartner ist Epoxiconazol zu nennen.

Das Mengenverhältnis der Triazole zu den Verbindungen I und II liegt in solchen ternären Mischungen im allgemeinen im Bereich von 20:1 bis 1: 20, vorzugsweise 10:1 bis 1:10.

Als Morpholin- bzw. Piperinderivate sind insbesondere die bekannten Wirkstoffe Tridemorph, Fenpropidin bzw. Fenpropimorph zu nennen, die kommerziell erhältlich sind. Besonders bevorzugt ist dabei Fenpropimorph zu nennen. Das Mengenverhältnis der Morpholin- bzw. Piperidinderivaten zu den Verbindungen I und II liegt dabei im allgemeinen im Bereich von 50:1 bis 1:10, vorzugsweise 25:1 bis 1:1.

Schließlich hat es sich in einigen weiteren Fällen als vorteilhaft herausgestellt, quaternäre Mischungen einzusetzen, die neben Verbindungen I und II ein Triazol und ein Morpholin- bzw. Piperidinderivat enthalten. Konkret als bevorzugt ist dabei eine Mischung aus Verbindungen I (insbesondere Verbindung I.78 aus Tabelle 2), Verbindungen II (bevorzugt Verbindungen II.32 bzw. II.38 aus Tabelle 3), Epoxiconazol und Fenpropimorph zu nennen.

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und II bzw. die Verbindungen I und II, gleichzeitig und zwar gemeinsam oder getrennt oder nacheinander ausgebracht, zeichnen sich durch eine hervorragende Wirkung gegen ein breites Spektrum von pflanzenpathogenen Pilzen, insbesondere aus der Klasse der Ascomyceten, Deuteromyceten, Phycomyceten und Basidiomyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Puccinia-Arten an Getreide, Rhizoctonia-Arten an Baumwolle und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinerea (Grauschimmel) an Erdbeeren und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig, und zwar gemeinsam oder getrennt, oder nacheinander ausgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 50:1 bis 0,1:1, vorzugsweise 25:1 bis 0,5:1, insbesondere 10:1 bis 1:1 angewendet.

Die Aufwandmengen der erfindungsgemäßen Mischungen liegen je nach Art des gewünschten Effekts bei 0,01 bis 3 kg/ha, vorzugsweise 0,1 bis 1,5 kg/ha, insbesondere 0,4 bis 1,0 kg/ha.

Die Aufwandmengen liegen dabei für die Verbindungen I bei 0,01 bis 0,5 kg/ha, vorzugsweise 0,05 bis 0,5 kg/ha, insbesondere 0,05 bis 0,2 kg/ha.

Die Aufwandmengen der erfindungsgemäßen Mischungen liegen je nach Art des gewünschten Effekts für die Verbindungen II bei 0.005 bis 0.5 kg/ha, vorzugsweise 0.05 bis 0.5 kg/ha, insbesondere 0.05 bis 0.2 kg/ha.

Bei der Saatgutbehandlung werden im allgemeinen Aufwandmengen an Mischung von 0,001 bis 50 g/kg Saatgut, vorzugsweise 0,01 bis 10 g/kg, insbesondere 0,01 bis 8 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen; Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylenalkylether, Laurylalkoholpolyglycoletheracetat. Sorbitester, Lignin-Sulfitablaugen oder Methylcellulose in Betracht.

Pulver Streu- und Stäubemittel können durch Mischen oder gemeinsames Vermahlen der Verbindungen I und II oder der Mischungen aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I und II. Die Wirkstoffe werden dabei in einer Reinheit von 90 % bis 100 %, vorzugsweise 95 % bis 100 % (nach NMR-Spektrum oder HPLC) eingesetzt.

Die Verbindungen I und II bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Die fungizide Wirkung der Verbindungen und der Mischungen läßt sich durch folgende Versuche zeigen:

Die Wirkstoffe werden getrennt oder gemeinsam als 10 %ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.

Colby Formel:

E = x + y + z -x·y·z/100

- E: zu erwartender Wirkungsgrad, ausgedrückt in % der unbehandelten Kontrolle, beim Einsatz der Mischung aus den Wirkstoffen A, B und C in den Konzentrationen a, b und c
- x: der Wirkungsgrad, ausgedrückt in % der unbehandelten Kontrolle, beim Einsatz des Wirkstoffs A in der Konzentration a
- y: der Wirkungsgrad, ausgedrückt in % der unbehandelten Kontrolle, beim Einsatz des Wirkstoffs B in der Konzentration b
- z: der Wirkungsgrad, ausgedrückt in % der unbehandelten Kontrolle, beim Einsatz des Wirkstoffs C in der Konzentration c

Der Wirkungsgrad (**W**) wird nach der Formel von Abbot wie folgt berechnet:

W = (1-α/β)·100

- α: entspricht dem Pilzbefall der behandelten Pflanzen in % und
- β: entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

### Anwendungsbeispiel 1 - Wirksamkeit gegen Weizenmehltau

Blätter von in Töpfen gewachsenen Weizenkeimlingen der Sorte "Kanzler" wurden mit wäßriger Wirkstoffaufbereitung, die mit einer Stammlösung aus 10 % Wirkstoff, 63 % Cyclohexanon und 27 % Emulgiermittel angesetzt wurde, bis zur Tropfnässe besprüht und 24 h nach dem Antrocknen des Spritzbelags mit Sporen des weizenmehltaus (Erysiphe graminis forma specialis tritici) bestäubt. Anschließend wurden die Versuchspflanzen in Klimakammern bei 20 - 24° C und 60 - 90 % relativer Luftfeuchtigkeit für 7 Tage aufgestellt. Dann wurde das Ausmaß der Befallsentwicklung auf den Blättern visuell ermittelt

Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Als Komponente II wurden die Verbindungen II.23, II.32 und II.38 aus Tabelle 3 eingesetzt.

Die Ergebnisse der Versuche sind den nachstehenden Tabellen 4 und 5 zu entnehmen:

**Tabelle 4:**

| Bsp. | Wirkstoff | Konz. in ppm | Wirkungsgrad in % der unbeh. Kontrolle |
|---|---|---|---|
| 1V | ohne | (90 % Befall) | 0 |
| 2V | Verbindung I.78 (common name: Quinoxyfen) | 1 0,25 0,06 | 33 0 0 |
| 3V | Verbindung II.23 | 4 1 0,25 0,06 | 78 67 11 0 |
| 4V | Verbindung II.32 | 1 0,25 0,06 | 67 11 0 |
| 5V | Verbindung II.38 | 4 1 0,25 0,06 | 78 67 11 0 |

**Tabelle 5:**

| Bsp. | erfindungsgemäße Mischung (Konz. in ppm) | beobachteter Wirkungsgrad | berechneter Wirkungsgrad* |
|---|---|---|---|
| 6 | 1 ppm I.78 + 1 ppm II.23 | 93 | 78 |
| 7 | 0,25 ppm I.78 + 0,25 ppm II.23 | 44 | 11 |
| 8 | 0,06 ppm I.78 + 0,06 ppm II.23 | 21 | 0 |
| 9 | 1 ppm I.78 + 4 ppm II.23 | 97 | 85 |
| 10 | 0,25 ppm I.78 + 1 ppm II.23 | 94 | 67 |
| 11 | 1 ppm I.78 + 0,25 ppm II.23 | 56 | 41 |
| 12 | 0,25 ppm I.78 + 0,06 ppm II.23 | 21 | 0 |
| 13 | 1 ppm I.78 + 1 ppm II.32 | 94 | 78 |
| 14 | 0,25 ppm I.78 + 0,25 ppm II.32 | 56 | 11 |
| 15 | 0,06 ppm I.78 + 0,06 ppm II.32 | 21 | 0 |
| 16 | 0,06 ppm I.78 + 0,25 ppm II.32 | 32 | 11 |
| 17 | 1 ppm I.78 + 0,25 ppm II.32 | 78 | 41 |
| 18 | 0,25 ppm I.78 + 0,06 ppm II.32 | 21 | 0 |
| 19 | 1 ppm I.78 + 1 ppm II.38 | 93 | 78 |
| 20 | 0,25 ppm I.78 + 0,25 ppm II.38 | 32 | 11 |
| 21 | 0,06 ppm I.78 + 0,06 ppm II.38 | 21 | 0 |
| 22 | 1 ppm I.78 + 4 ppm II.38 | 100 | 85 |
| 23 | 1 ppm I.78 + 0,25 ppm II.38 | 67 | 41 |
| 24 | 0,25 ppm I.78 + 0,06 ppm II.38 | 21 | 0 |

| | | | |
|---|---|---|---|
| * berechnet nach der Colby-Formel | | | |

Aus den Ergebnissen der Versuche geht hervor, daß der beobachtete Wirkungsgrad in allen Mischungsverhältnissen höher ist als der nach der Colby-Formel vorausberechnete Wirkungsgrad.

## Patentansprüche

1. Fungizide Mischungen, enthaltend als aktive Komponenten
a) eine Verbindung der Formel I 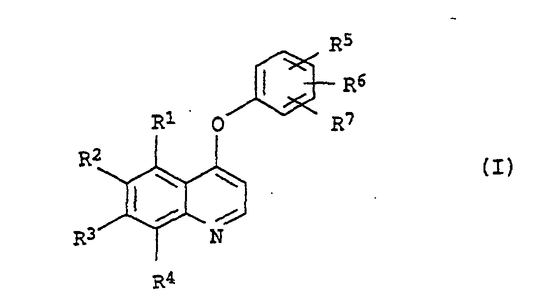 ihr N-Oxid oder eines ihrer Salze, in der die Reste die folgende Bedeutung haben:
R¹,R²,R³,R⁴ unabhängig voneinander: Wasserstoff, Hydroxy, Nitro, Halogen, C₁-C₄-Alkyl, C₁-C₄-Halogenalkyl, C₁-C₄-Alkoxy, C₁-C₄-Halogenalkoxy, C₁-C₄-Alkylthio, C₁-C₄-Halogenalkylthio;
R⁵,R⁶,R⁷ unabhängig voneinander: Wasserstoff, Hydroxy, Cyano, Nitro, Halogen, C₁-C₇-Alkyl, C₁-C₇-Halogenalkyl, C₁-C₇-Alkoxy, C₁-C₇-Halogenalkoxy, C₁-C₇-Alkylthio, C₁-C₇-Halogenalkylthio, C₁-C₇-Hydroxyalkyl, C₂-C₄-Acyl, Aryl, Aryloxy, wobei die Reste mit Aryl ihrerseits eine bis drei der folgenden Gruppen tragen können: Cyano, Nitro, Halogen, C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio, und
b) Carbamate der Formel II, 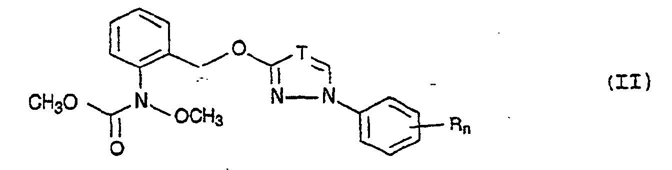 in der T CH oder N bedeutet, n für 0, 1 oder 2 steht und R Halogen, C₁-C₄-Alkyl oder C₁-C₄-Halogenalkyl bedeutet, wobei die Reste R verschieden sein können, wenu n für 2 steht,
in einer synergistisch wirksamen Menge.

2. Fungizide Mischung nach Anspruch 1, **dadurch gekennzeichnet, daß** das Gewichtsverhältnis der Verbindung I zur Verbindung II 20:1 bis 1:20 beträgt.

3. Fungizide Mischungen nach Anspruch 1, enthaltend einen Wirkstoff aus der Gruppe der Triazole als weiteren Wirkstoff.

4. Fungizide Mischungen nach Anspruch 1, enthaltend als weitere aktive Komponente einen Wirkstoff aus der Gruppe bestehend aus Fenpropimorph, Fenpropidin und Tridemorph oder deren Mischungen

5. Fungizide Mischungen nach einem der Ansprüche 1 bis 3, enthaltend als weitere aktive Komponente einen Wirkstoff aus der Gruppe bestehend aus Fenpropimorph, Fenpropidin und Tridemorph oder deren Mischungen.

6. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer Verbindung der Formel I gemäß Anspruch 1 und einer Verbindung II gemäß Anspruch 1 behandelt.

7. Verfahren nach Anspruch 6, **dadurch gekennzeichnet, daß** man die Verbindungen I und die Verbindungen II gleichzeitig, und zwar gemeinsam oder getrennt, oder nacheinander ausbringt.

8. Verfahren nach Anspruch 6, **dadurch gekennzeichnet, daß** man die Schadpilze, deren Lebensraum oder die von ihnen freizuhaltenden Pflanzen, Samen, Böden, Flächen, Materialien oder Räume mit 0,01 bis 0,5 kg/ha einer Verbindung I gemäß Anspruch 1 behandelt.

9. Verwendung der Verbindungen I gemäß Anspruch 1 zur Herstellung von fungizid wirksamen synergistischen Mischungen gemäß Anspruch 1.

10. Verwendung einer der Verbindungen II gemäß Anspruch 1 zur Herstellung von fungizid wirksamen synergistischen Mischungen gemäß Anspruch 1.

11. Fungizide Mischung nach einem der vorhergehenden Ansprüche, welche in zwei Teilen konditioniert ist, wobei der eine Teil die Verbindungen I in einem festen oder flüssigen Träger enthält und der andere Teil eine oder mehrere Verbindungen der Formeln II in einem festen oder flüssigen Träger enthält.

## Claims

1. A fungicidal mixture, comprising as active components
a) a compound of the formula I 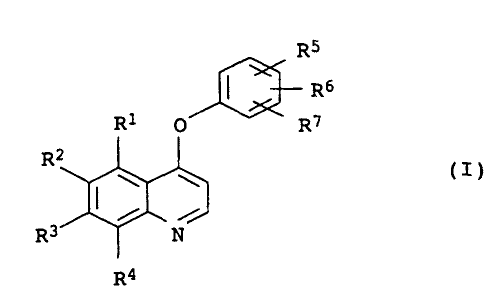 its N-oxide or one of its salts where:
R¹,R²,R³,R⁴ independently of one another are: hydrogen, hydroxyl, nitro, halogen, C₁-C₄-alkyl, C₁-C₄-haloalkyl, C₁-C₄-alkoxy, C₁-C₄-haloalkoxy, C₁-C₄-alkylthio, C₁-C₄-haloalkylthio;
R⁵,R⁶,R⁷ independently of one another are: hydrogen, hydroxyl, cyano, nitro, halogen, C₁-C₇-alkyl, C₁-C₇-haloalkyl, C₁-C₇-alkoxy, C₁-C₇-haloalkoxy, C₁-C₇-alkylthio, C₁-C₇-haloalkylthio, C₁-C₇-hydroxyalkyl, C₂-C₄-acyl, aryl, aryloxy, where the radicals with aryl may for their part carry one to three of the following groups: cyano, nitro, halogen, C₁-C₄-alkyl, C₁-C₄-haloalkyl, C₁-C₄-alkoxy, C₁-C₄-haloalkoxy, C₁-C₄-alkylthio and C₁-C₄-haloalkylthio, and
b) carbamates of the formula II, 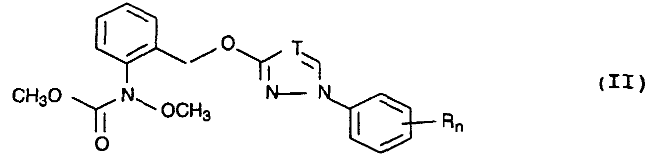 in which T is CH or N, n is 0, 1 or 2 and R is halogen, C₁-C₄-alkyl or C₁-C₄-haloalkyl, where the radicals R may be different if n is 2,
in a synergistically effective amount.

2. A fungicidal mixture as claimed in claim 1, wherein the weight ratio of the compound I to the compound II is from 20:1 to 1:20.

3. A fungicidal mixture as claimed in claim 1, comprising an active compound from the group of the triazoles as further active compound.

4. A fungicidal mixture as claimed in claim 1, comprising as further active component an active compound from the group consisting of fenpropimorph, fenpropidin and tridemorph, or mixtures thereof.

5. A fungicidal mixture as claimed in any of claims 1 to 3, comprising as further active component an active compound from the group consisting of fenpropimorph, fenpropidin and tridemorph, or mixtures thereof.

6. A method for controlling harmful fungi, which comprises treating the harmful fungi, their habitat or the plants, seeds, soils, areas, materials or spaces to be kept from them with a compound of the formula I as set forth in claim 1 and a compound II as set forth in claim 1.

7. A method as claimed in claim 6, wherein the compounds I and the compounds II are applied simultaneously, i.e. either jointly or separately, or successively.

8. A method as claimed in claim 6, wherein the harmful fungi, their habitat or the plants, seeds, soils, areas, materials or spaces to be kept free from them are treated with from 0.01 to 0.5 kg of a compound I as set forth in claim 1/ha.

9. The use of the compound I as set forth in claim 1 for preparing fungicidally active synergistic mixtures as claimed in claim 1.

10. The use of one of the compounds II as set forth in claim 1 for preparing fungicidally active synergistic mixtures as claimed in claim 1.

11. A fungicidal mixture as claimed in any of the preceding claims which is conditioned in two parts, one part comprising the compounds I in a solid or liquid carrier and the other part comprising one or more compounds of the formula II in a solid or liquid carrier.

## Revendications

1. Mélanges fongicides, contenant en tant que composants actifs,
a) un composé de formule I 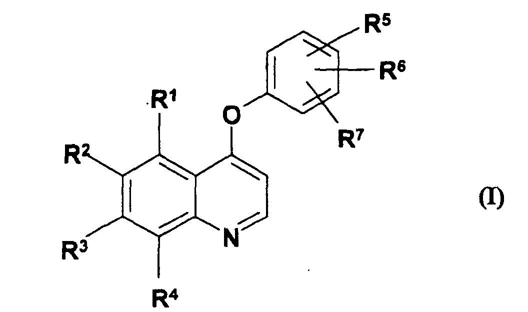 son N-oxyde ou un de ses sels, dans lequel les résidus prennent la signification suivante :
R¹, R², R³, R⁴ représentent indépendamment l'un de l'autre : un atome d'hydrogène, un groupe hydroxy, nitro, un atome d'halogène, un groupe alkyle en C₁ à C₄, halogénoalkyle en C₁ à C₄, alcoxy en C₁ à C₄, halogénoalcoxy en C₁ à C₄, alkylthio en C₁ à C₄, halogénoalkylthio en C₁ à C₄;
R⁵, R⁶, R⁷ représentent indépendamment l'un de l'autre : un atome d'hydrogène, un groupe hydroxy, cyano, nitro, un atome d'halogène, un groupe alkyle en C₁ à C₇, halogénoalkyle en C₁ à C₇, alcoxy en C₁ à C₇, halogénoalcoxy en C₁ à C₇, alkylthio en C₁ à C₇, halogénoalkylthio en C₁ à C₇, hydroxyalkyle en C₁ à C₇, acyle en C₂ à C₄, aryle, aryloxy, les résidus avec un groupe aryle de leur côté pouvant porter un jusqu'à trois groupes parmi les suivants: un groupe cyano, nitro, un atome d'halogène, un groupe alkyle en C₁ à C₄, halogénoalkyle en C₁ à C₄, alcoxy en C₁ à C₄, halogénoalcoxy en C₁ à C₄, alkylthio en C₁ à C₄, et halogénoalkylthio en C₁ à C₄, et
b) des carbamates de formule II, 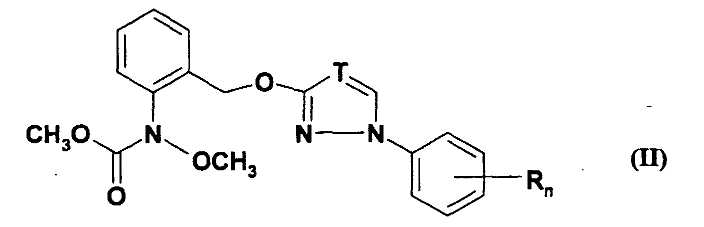 dans laquelle T signifie CH ou N, n représente 0, 1 ou 2 et R signifie un atome d'halogène, un groupe alkyle en C₁ à C₄ ou halogénoalkyle en C₁ à C₄, les résidus R pouvant être différents lorsque n représente 2,
dans une quantité à effet synergique.

2. Mélange fongicide selon la revendication 1, **caractérisé en ce que** le rapport pondéral du composé I au composé II est de 20:1 à 1:20.

3. Mélanges fongicides selon la revendication 1, contenant un principe actif du groupe formé par les triazoles, en tant que principe actif supplémentaire.

4. Mélanges fongicides selon la revendication 1, contenant en tant que composant actif supplémentaire, un principe actif du groupe formé par le fenpropimorphe, la fenpropidine et le tridémorphe ou leurs mélanges.

5. Mélanges fongicides selon l'une quelconque des revendications 1 à 3, contenant en tant que composant actif supplémentaire, un principe actif du groupe formé par le fenpropimorphe, la fenpropidine et le tridémorphe ou leurs mélanges.

6. Procédé pour combattre les champignons nuisibles, **caractérisé en ce que** l'on traite les champignons nuisibles, leur espace vital ou les plantes, semences, sols, surfaces, matériels ou espaces à protéger contre eux, avec un composé de formule I selon la revendication 1 et un composé de formule II selon la revendication 1.

7. Procédé selon la revendication 6, **caractérisé en ce que** l'on produit les composés I et les composés II simultanément et, soit séparés, soit ensemble, ou bien les uns après les autres.

8. Procédé selon la revendication 6, **caractérisé en ce que** l'on traite les champignons nuisibles, leur espace vital ou les plantes, semences, sols, surfaces, matériels ou espaces à protéger contre eux, avec 0,01 à 0,5 kg/ha d'un composé de formule I selon la revendication 1.

9. Utilisation des composés I selon la revendication 1 pour préparer des mélanges synergiques à effet fongicide selon la revendication 1.

10. Utilisation d'un des composés II selon la revendication 1 pour préparer des mélanges synergiques à effet fongicide selon la revendication 1.

11. Mélange fongicide selon l'une quelconque des revendications précédentes, lequel est conditionné en deux parties, l'une des parties contenant les composés I dans un véhicule solide ou liquide et l'autre partie contenant un ou plusieurs composés de formules II dans un véhicule solide ou liquide.
